# EUROPEAN PATENT SPECIFICATION

(11) **EP 0 726 195 B1**
(45) Date of publication and mention of the grant of the patent: **27.05.1998**
(21) Application number: 96101706.8
(22) Date of filing: 06.02.1996
(51) Int. Cl.: B62J 11/00, B62K 19/46, B62H 5/00

(54) **Scooter type vehicle with storing structure for antitheft tool**
Motorrollerartiges Fahrzeug mit Behälterstruktur für Schlossgerät
Véhicule du type scooter avec une structure contenant un dispositif de verrouillage

(30) Priority: 07.02.1995 JP 19406/95
(43) Date of publication of application: 14.08.1996
(73) Proprietor: HONDA GIKEN KOGYO KABUSHIKI KAISHA, Minato-ku Tokyo (JP)
(72) Inventor: Suzuki, Masaaki, c/o K.K. Honda Gijutsu Kenkyusho, Wako-shi, Saitama (JP); Sako, Hiroyuki, c/o K.K. Honda Gijutsu Kenkyusho, Wako-shi, Saitama (JP); Takahashi, Yuichi, c/o K.K. Honda Gijutsu Kenkyus., Wako-shi, Saitama (JP)
(74) Representative: Liska, Horst, Dr.-Ing.

(56) References cited:
- EP-A- 0 463 942
- EP-A- 0 492 742
- EP-A- 0 644 106
- DE-A- 3 211 367
- US-A- 4 671 374

## Description

The present invention relates to a scooter type vehicle having a seat vertically pivotably supported to a vehicle body, a tank located below the seat, and a cap provided on an upper surface of the tank and adapted to be ezposed by upward pivoting the seat, and more particularly to a storing structure for an antitheft tool in such a scooter type vehicle.

A structure for storing an antitheft wheel lock chain below a seat vertically pivotably supported to a vehicle body is conventionally known from Japanese Utility Model Publication No. Shou 62-15113.

In recent years, as an antitheft tool substituted for the wheel lock chain, there has been used a so-called U-shaped lock having a U-shaped body portion and a rodlike detachable portion lockable to both ends of the body portion by key operation. The U-shaped lock has a flat shape as a whole such that the thickness thereof is small, but it occupies a large area. Therefore, it is sometimes difficult to ensure a storing space for the U-shaped lock.

A scooter-type vehicle having a structure for storing a U-shaped lock is disclosed in EP-A-492 742. The storing structure comprises guide means for the legs of the U-shaped body portion and a rodlike portion holder engaging the rodlike portion. The guide means for the body portion is designed as a slot provided in the seat of the vehicle in which slot the closed end of the body portion is received and as sections of corresponding cross-sections on either side of the vehicle along the rear wheel thereof extending below the seat. The closure unit holder comprises two pins positioned in such a manner that the rodlike portion connected to these pins blocks the removal of the body portion from the slot. For storing the U-shaped lock the rodlike portion is detached from the body portion and the body portion is inserted into the guide means. Then the rodlike portion is connected to the rodlike portion holder to block the removal of the body portion from the guide means.

The above described storing structure is difficult to produce. Moreover it is only possible to store the U-shaped lock when the body portion and the rodlike portion are separated from each other, i.e. when they are in an uncoupled state.

It is accordingly an object of the present invention to rationally store a closed antitheft tool such as the U-shaped lock in a space below a seat.

To achieve the above object, the invention provides, as defined in claim 1, a scooter type vehicle having a seat vertically pivotably supported to a vehicle body, a tank located below the seat, and a cap provided on an upper surface of the tank and adapted to be exposed by upward pivoting the seat, a storing structure for an antitheft tool; the storing structure defines a space for a U-shaped lock between an upper surface of a tray fixed to the vehicle body, a bottom plate of the seat and the cap, whereby, when the lock is stored the cap projects from the upper surface of the tray in a region surrounded by the body portion and the rod-like portion of the U-shaped lock.

According to claim 1, the antitheft tool is stored in the space between the tray and the seat by upward pivoting the seat to expose the tray, and then placing the closed antitheft tool in such a manner that the cap projecting from the upper surface of the tray is surrounded by the antitheft tool.

According to the invention as defined in claim 1, the space for storing the closed antitheft tool is defined between the upper surface of the tray fixed to the vehicle body and the lower surface of the seat, and the cap of the tank projects from the upper surface of the tray so as to be exposed inside the antitheft tool stored in this space. Accordingly, the vertically thin space between the upper surface of the tank and the lower surface of the seat can be used both for location of the cap of the tank and for storing of the antitheft tool, thus effectively utilizing the space.

The invention as defined in claim 2 inclusive of the subject-matter of claim 1 is characterized in that a stand lock lever for locking a main stand in its standing position is provided below the antitheft tool in the space.

According to the invention as defined in claim 2, the stand lock lever for locking the main stand in its standing position is provided below the antitheft tool in the above-mentioned space. Accordingly, when the antitheft tool is taken out from the tray for operation, the stand lock lever located below the antitheft tool comes into rider's view, thereby eliminating the possibility that the rider may forget about locking the main stand.

A preferred embodiment of the present invention will now be described with reference to the drawings.

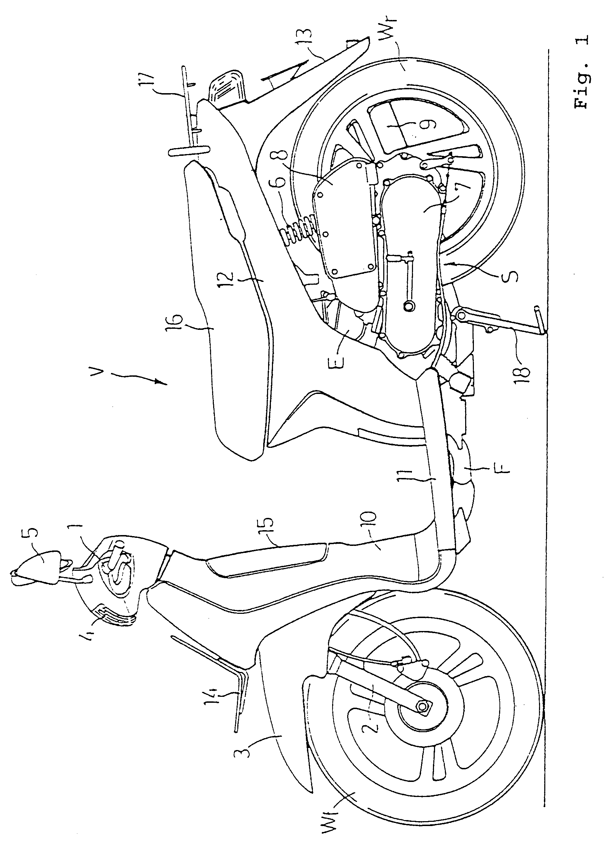

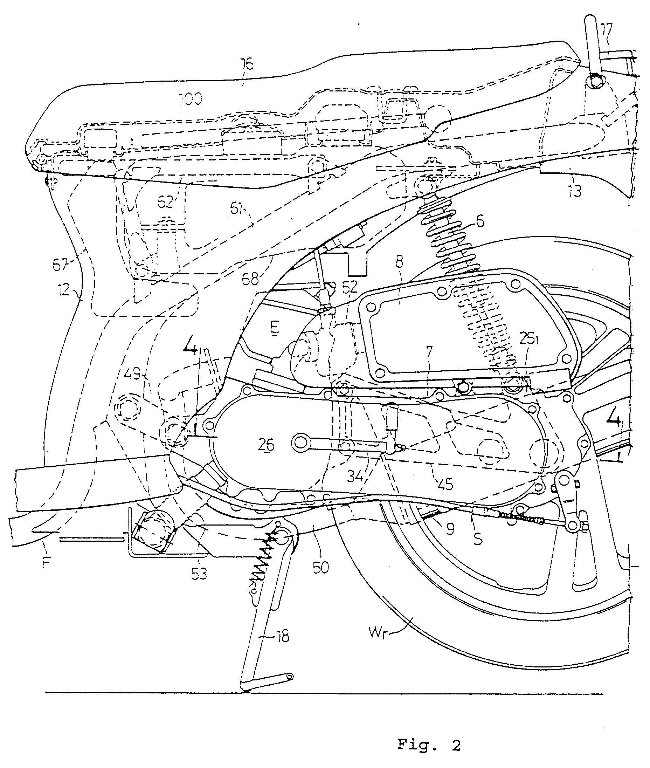

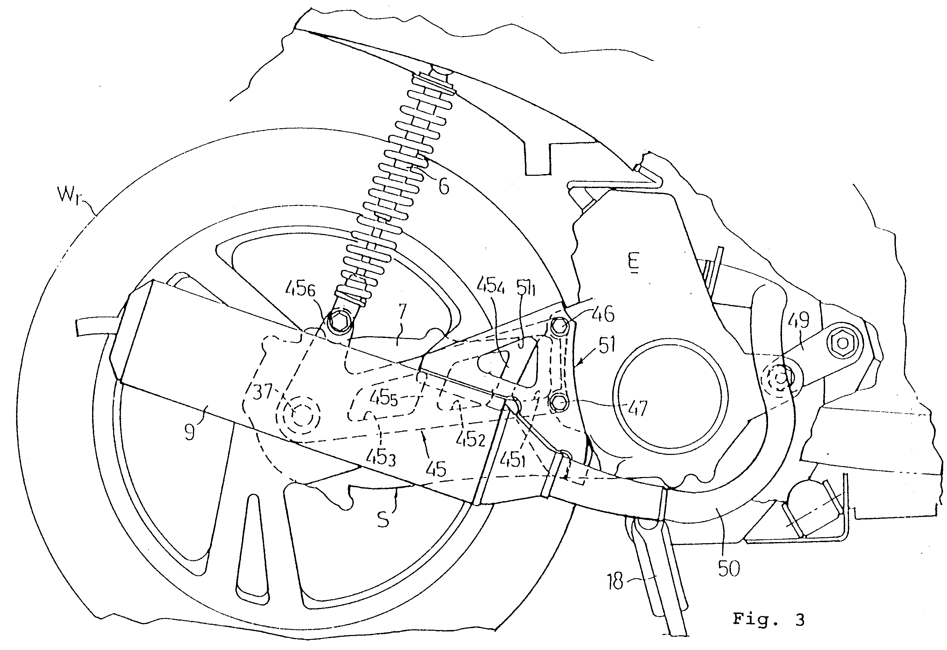

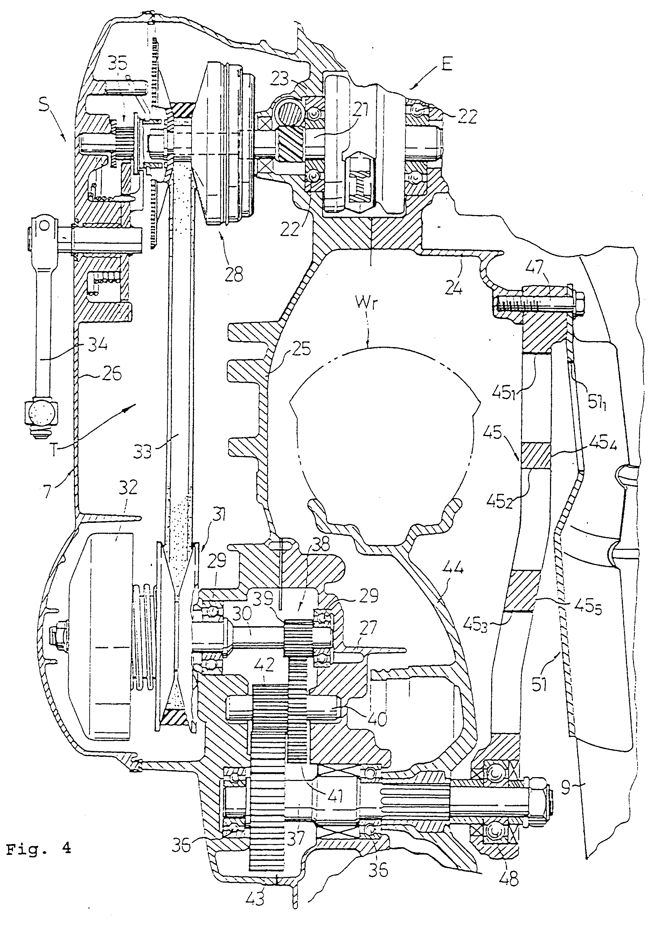

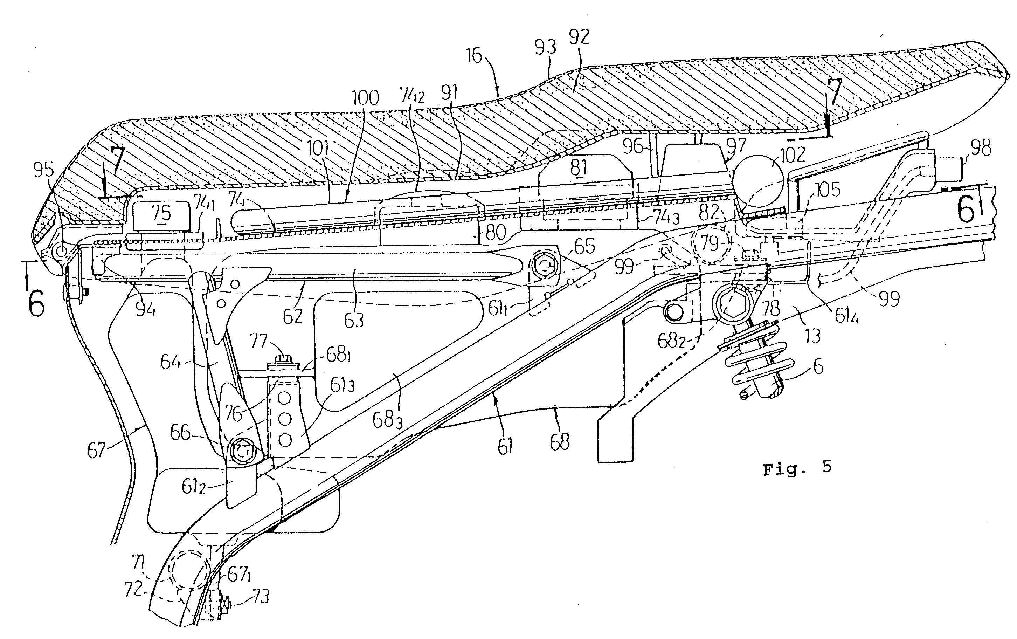

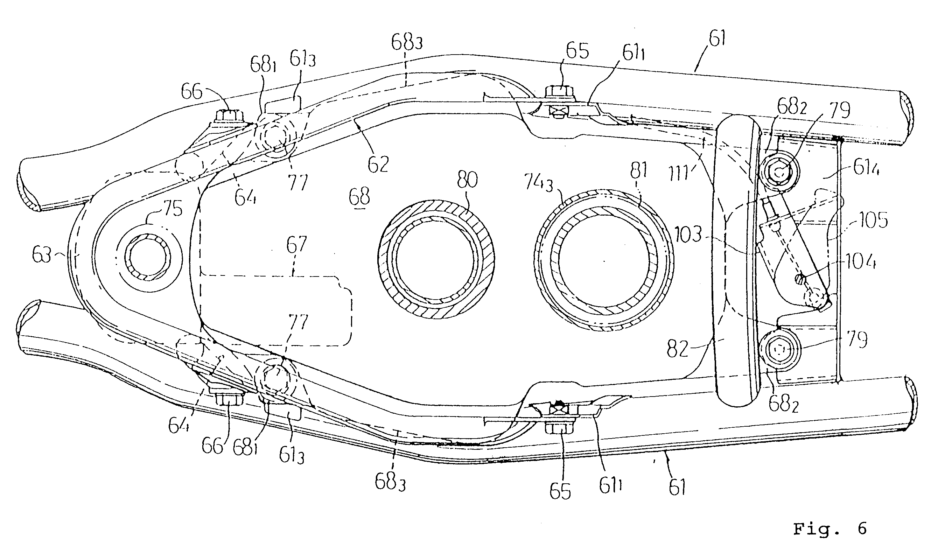

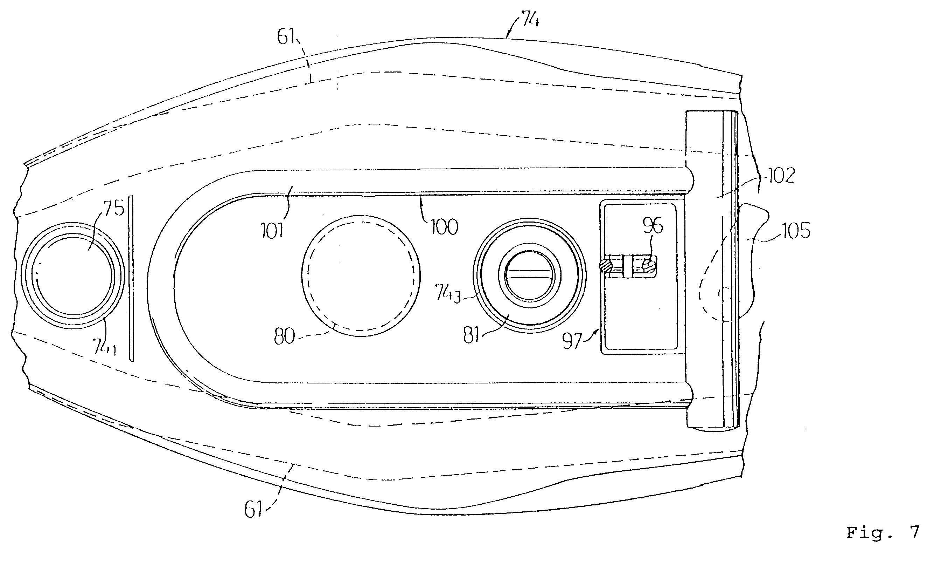

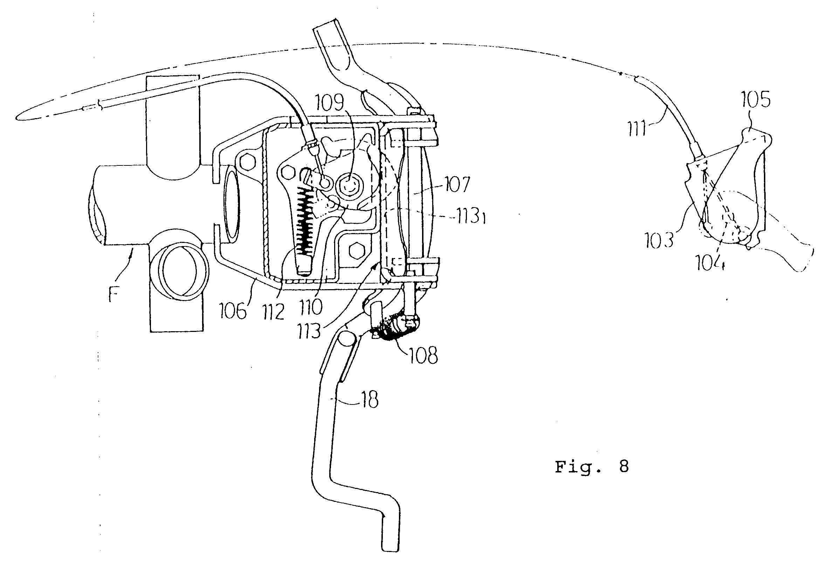

FIGS. 1 to 8 show a preferred embodiment of the present invention, in which FIG. 1 is a left side view of a motorcycle; FIG. 2 is an enlarged view of an essential part in FIG. 1; FIG. 3 is an enlarged view of an essential part of the motorcycle as viewed from the right side thereof; FIG. 4 is an enlarged cross section taken along the line 4-4 in FIG. 2; FIG. 5 is an enlarged view of an essential part in FIG. 2; FIG. 6 is a cross section taken along the line 6-6 in FIG. 5; FIG. 7 is a cross section taken along the line 7-7 in FIG. 5; and FIG. 8 is a cross section taken along the line 8-8 in FIG. 2.

As shown in FIG. 1, a scooter type motorcycle V includes a front wheel Wf and a rear wheel Wr at the front and rear portions of a vehicle body. The front wheel Wf is rotatably supported through an axle to the lower ends of a front fork 2 adapted to be turned to the right or the left by a steering handle 1. The upper side of the front wheel Wf is covered with a front fender 3. The steering handle 1 is provided with a headlight 4 and a rearview mirror 5. A swing unit S is vertically swingably supported to the vehicle body and is suspended by a pair of right and left cushions 6. The swing unit S includes at its front portion an engine E and at its rear portion a transmission case 7. The rear wheel Wr is rotatably supported through an axle to the rear end of the transmission case 7. An air cleaner 8 is provided on the left side of the swing unit S, and a muffler 9 is provided on the right side of the swing unit S.

Supported to a vehicle frame F are a leg shield 10 for covering the front side of rider's legs, a floor panel 11 for supporting rider's feet, a rear cover 12 for covering the rear portion of the vehicle body, and a rear fender 13 for covering the upper side of the rear wheel Wr. A front carrier 14 and a front pocket 15 are provided on the front surface and the rear surface of the leg shield 10, respectively. A seat 16 and a rear carrier 17 are provided on the upper surface of the rear cover 12 at its front portion and rear portion, respectively. A main stand 18 is provided at the lower portion of the vehicle frame F.

The structure of the swing unit S will now be described with reference to FIGS. 2 to 4.

The engine E includes a left crankcase half 23 and a right crankcase half 24 for supporting both end portions of a crankshaft 21 through a pair of ball bearings 22. A transmission case body 25 for storing a belt type continuously variable transmission T is formed integrally with the rear portion of the left crankcase half 23. A transmission case cover 26 is connected to a left open end of the transmission case body 25, and a speed reducer cover 27 is connected to the right side surface of the transmission case body 25 at its rear portion.

The belt type continuously variable transmission T stored in the space defined by the transmission case body 25 and the transmission case cover 26 includes a drive pulley 28 mounted on the left end of the crankshaft 21 as an input shaft and having a groove whose width is variable by a centrifugal force, an output shaft 30 supported through a pair of ball bearings 29 to the transmission case body 25 and the speed reducer cover 27, a driven pulley 31 mounted on the output shaft 30 so as to be rotatable relative thereto, an automatic centrifugal clutch 32 mounted on the output shaft 30 and capable of connecting the driven pulley 31 to the output shaft 30, and an endless belt 33 wrapped between the drive pulley 28 and the driven pulley 31. The transmission case cover 26 is provided with a kick starter 35 having a kick pedal 34.

An axle 37 of the rear wheel Wr is supported through a pair of ball bearings 36 to the transmission case body 25 and the speed reducer cover 27. The axle 37 is connected through a speed reducer 38 to the output shaft 30. The speed reducer 38 is stored in the space defined between the transmission case body 25 and the speed reducer cover 27, and includes a first gear 39 mounted on the output shaft 30, a second gear 41 and a third gear 42 both mounted on an intermediate shaft 40, and a fourth gear 43 mounted on the axle 37. A wheel 44 of the rear wheel Wr is splined to a portion of the axle 37 projecting rightward from the speed reducer cover 27.

The transmission case 7 is disposed on the left side of a laterally central plane of the vehicle body, that is, on the left side of an axially central plane of the rear wheel Wr, and a swing arm 45 is disposed on the right side of the laterally central plane of the vehicle body. The swing arm 45 is a substantially triangular platelike member integrally formed by aluminum die casting. The swing arm 45 is connected at its front portion relatively wide in the vertical direction to the right crankcase half 24 of the engine E by a pair of upper and lower bolts 46 and 47. The axle 37 is supported at its right end through a ball bearing 48 to the rear portion of the swing arm 45. The swing arm 45 is formed with three openings 45₁, 45₂, and 45₃ arranged in the longitudinal direction. The three openings 45₁ to 45₃ are isolated from each other by two columns 45₄ and 45₅ inclined frontward at their upper portions. The front opening 45₁ has a substantially triangular shape, and the central and rear openings 45₂ and 45₃ have a substantially parallelogrammic shape.

The swing unit S has a highly rigid box structure formed by the engine E on the front side, the axle 37 on the rear side, the transmission case 7 on the left side, and the swing arm 45 on the right side. The front end of the swing unit S is pivotably supported through a link 49 to the vehicle frame F, and the rear end of the swing unit S is suspended from the vehicle frame F through the left cushion 6 connected to a cushion boss 25₁ formed at the rear portion of the transmission case body 25 and the right cushion 6 connected to a cushion boss 45₆ formed at the rear portion of the swing arm 45.

The muffler 9 is connected at its front end to the rear end of an exhaust pipe 50 extending from the engine E to the right side of the vehicle body. A triangular mounting stay 51 is welded to the front portion of the muffler 9. The mounting stay 51 is secured to the engine E by the two bolts 46 and 47 connecting the swing arm 45 to the engine E. Thus, the muffler 9 can be supported with a reduced number of parts. The mounting stay 51 is formed with a triangular opening 51₁.

As mentioned above, the swing arm 45 and the mounting stay 51 both disposed along the right side surface of the transmission case 7 have the openings 45₁ to 45₃ and 51₁, respectively. Accordingly, there hardly occurs the resonance of engine noise and vehicle running noise in the space surrounded by the transmission case 7 and the swing arm 45, thereby reducing noises due to the resonance. Furthermore, the front end of the swing arm 45 is connected to the engine E by the two, upper and lower bolts 46 and 47, thereby enough ensuring the rigidity against a vertical load input from the rear wheel Wr. In addition, the swing arm 45 has a ladder-like configuration formed by the three openings 45₁ to 45₃ and the two columns 45₄ and 45₅, thereby reducing the weight of the swing arm 45 owing to the lightening effect by the openings 45₁ to 45₃ and simultaneously obtaining high rigidity of the swing arm 45.

In FIG. 2, reference numeral 52 denotes a carburetor disposed between the air cleaner 8 and the engine E, and reference numeral 53 denotes a duct for introducing a cooling air from the inside of the vehicle frame F to the inside of the transmission case 7.

The structure of the rear portion of the vehicle body will now be described with reference to FIGS. 5 to 8.

The vehicle frame F has a pair of right and left rear frames 61 rising on the front side of the swing unit S and extending rearward. A seat rail 62 is composed of a seat supporting portion 63 having a U-shape as viewed in plan and a pair of right and left leg portions 64 extending downward from the seat supporting portion 63. The right and left, rear ends of the seat supporting portion 63 is detachably connected by two bolts 65 to two brackets 61₁ provided on the two rear frames 61, and the lower ends of the two leg portions 64 are detachably connected by two bolts 66 to two brackets 61₂ provided on the two rear frames 61.

An oil tank 67 formed of synthetic resin and a fuel tank 68 formed of synthetic resin are disposed in tandem in the space surrounded by the rear frames 61 and the seat rail 62. A bracket 67₁ integrally formed with and projecting from the lower surface of the oil tank 67 is fixed by a bolt 73 to a bracket 72 of a cross member 71 connecting the right and left rear frames 61. A platelike tray 74 is substantially horizontally disposed so as to cover an upper opening of the rear cover 12. The tray 74 is formed with an opening 74₁ from which a cap 75 for openably closing an oil filler opening of the oil tank 67 is exposed to project upward.

On the other hand, a pair of right and left brackets 68₁ integrally formed with and projecting from the right and left side surfaces of the fuel tank 68 at its front portion are fixed by two bolts 77 through two rubber bushings 76 to two brackets 61₃ provided on the two rear frames 61. Further, a pair of right and left brackets 68₂ integrally formed with and projecting from the rear surface of the fuel tank 68 are fixed by two bolts 79 through two rubber bushings 78 to a bracket 61₄ extending between the two rear frames 61. A fuel level sensor 80 and a cap 81 for openably closing a fuel filler opening of the fuel tank 68 project upward from the upper surface of the fuel tank 68. The fuel level sensor 80 is fitted within a hollow projection 74₂ formed on the upper surface of the tray 74, and the cap 81 is exposed to project from an opening 74₃ formed through the tray 74.

The right and left side walls of the fuel tank 68 are formed with right and left projections 68₃ projecting rightward and leftward of the vehicle body, respectively. As apparent from FIG. 6, the projections 68₃ of the fuel tank 68 overlap the rear frames 61 and the seat rail 62 as viewed in plan. That is, the projections 68₃ project sideward of the vehicle body so as to be fitted within the right and left spaces between the rear frames 61 and the seat supporting portion 63 of the seat rail 62, thereby allowing an increase in capacity of the fuel tank 68.

With this arrangement, when the detachable seat rail 62 is removed from the rear frames 61, the fuel tank 68 having the projections 68₃ can be mounted to and removed from the rear frames 61 without interference with the seat rail 62. As a result, the degree of freedom of designing the shapes and sizes of the oil tank 67 and the fuel tank 68 disposed inside the seat rail 62 can be greatly increased to ensure the capacities of the oil tank 67 and the fuel tank 68 to the maximum. Furthermore, the side portions of the oil tank 67 and the fuel tank 68 are supported by the seat rail 62, and the rear portion of the fuel tank 68 is supported by a cross member 82 extending between the right and left rear frames 61, thereby protecting both the tanks 67 and 68.

The seat 16 is composed of a bottom plate 91, a cushion member 92, and a skin 93. The seat 16 is vertically pivotably supported through a seat hinge 95 to a bracket 94 provided at the front end of the seat rail 62. A U-shaped striker 96 is fixed to the lower surface of the bottom plate 91, and a lock mechanism 97 engageable with the striker 96 is provided on the rear portion of the tray 74. The lock mechanism 97 is linked through a Bowden wire 99 to a cylinder lock 98 provided at the rear end of the tray 74, thereby restricting the opening and closing of the seat 16 due to mischief.

A closed antitheft tool 100 is stored in the space defined between the upper surface of the tray 74 and the lower surface of the bottom plate 91 of the seat 16. The antitheft tool 100 is composed of a U-shaped body portion 101 and a rodlike detachable portion 102 lockable to both ends of the body portion 101 by key operation. For example, the body portion 101 is passed through any one opening of the wheel 44 of the rear wheel Wr, and in this condition the detachable portion 102 is locked to the body portion 101. Alternatively, the body portion 101 is passed through any one opening of the wheel 44 of the rear wheel Wr and is engaged with a fixed structure such as a guide rail post, and in this condition the detachable portion 102 is locked to the body portion 101. Thus, a theft of the motorcycle V can be prevented.

As apparent from FIG. 7, the cap 75 of the oil tank 67, the cap 81 of the fuel tank 68, the projection 74₂ within which the fuel-level sensor 80 of the fuel tank 68 is fitted, and the lock mechanism 97 project upward from the upper surface of the tray 74. The antitheft tool 100 is placed on the upper surface of the tray 74 so that the cap 81, the projection 74₂, and the lock mechanism 97 are disposed in the space surrounded by the body portion 101 and the detachable portion 102 of the antitheft tool 100.

As mentioned above, there is necessarily defined the space between the upper surface of the tray 74 and the bottom plate 91 of the seat 16 because of the presence of various projecting objects including the cap 75 of the oil tank 67, the cap 81 of the fuel tank 68, the projection 74₂ within which the fuel level sensor 80 of the fuel tank 68 is fitted, and the lock mechanism 97. This space can be effectively used as a space for storing the antitheft tool 100. Furthermore, since the cap 81, the fuel level sensor 80, and the lock mechanism 97 are arranged in the longitudinal direction of the vehicle body, and the closed antitheft tool 100 is disposed so as to surround these projecting objects, various antitheft tools different in length and width as the antitheft tool 100 can be stored in the above space.

A lock lever supporting member 103 is provided on the lower surface of the bracket 61₄ supporting the rear portion of the fuel tank 68, and a stand lock lever 105 is horizontally pivotably supported through a pivot 104 to the lock lever supporting member 103. On the other hand, the main stand 18 is vertically swingably supported through a pin 107 to a stand stay 106 provided at the lower portion of the vehicle frame F. The main stand 18 is designed to stably hold either a standing position shown in FIG. 8 or a retracted position obtained by rearward and upward swing from the standing position, by the elastic force of a toggle spring 108. A cam plate 110 is horizontally pivotably supported through a pivot 109 to the stand stay 106. The cam plate 110 is linked through a Bowden wire 111 to the stand lock lever 105, and is biased counterclockwise as viewed in FIG. 8 by a spring 112. A stopper plate 113 integral with the main stand 18 is formed with a slit 113₁ with which the cam plate 110 is engageable.

Accordingly, when the stand lock lever 105 is operated from a phantom line position to a solid line position shown in FIG. 8 in the standing condition of the main stand 18, the cam plate 110 is pulled by the Bowden wire 111 to rotate clockwise about the pivot 109 against the spring 112 and come into engagement with the slit 113₁ of the stopper plate 113 integral with the main stand 18, thereby locking the main stand 18 in the standing position.

As apparent from FIG. 7, the stand lock lever 105 is disposed below the detachable portion 102 of the antitheft tool 100. Accordingly, when the seat 16 is opened to take out the antitheft tool 100 in the rest condition of the motorcycle V, the stand lock lever 105 having been disposed below the antitheft tool 100 naturally comes into rider's view, thereby eliminating the possibility that the rider may forget about locking the main stand 18.

Having thus described the specific embodiment of the present invention, it should be noted that various design modifications may be made without departing from the scope of the present invention.

For example, although the cap 81 of the fuel tank 68 is exposed inside the antitheft tool 100 in the above preferred embodiment, the cap 75 of the oil tank 67 or both the cap 81 of the fuel tank 68 and the cap 75 of the oil tank 67 may be exposed inside the antitheft tool 100.

## Claims

1. A scooter type vehicle having a seat (16) vertically pivotably supported to a vehicle body, a tank (68) located below said seat (16), and a cap (81) provided on an upper surface of said tank (68) and adapted to be exposed by upward pivoting said seat (16), a storing structure for an antitheft tool, characterized in that said storing structure defines a space for a U-shaped lock (100) between an upper surface of a tray (74) fixed to said vehicle body, a bottom plate (91) of said seat and said cap (81), whereby, when said lock (100) is stored, said cap projects from said upper surface of the tray in a region surrounded by the body portion (101) and the rodlike portion (102) of the U-shaped lock (100).

2. A scooter type vehicle according to claim 1, characterized in that a stand lock lever (105) for locking a main stand (18) in its standing position is provided below said antitheft tool (100) in said space.

## Patentansprüche

1. Motorrollerartiges Fahrzeug, das einen Sitz (16) aufweist, der an einem Fahrzeugrumpf vertikal schwenkbar gelagert ist, einen unter dem Sitz (16) angeordneten Tank (68) und einen Deckel (81), der an einer oberen Fläche des Tanks (68) vorgesehen ist und durch Aufwärtsschwenken des Sitzes (16) freilegbar ist, eine Aufbewahrungsstruktur für eine Diebstahlsicherungsvorrichtung, dadurch gekennzeichnet, daß die Aufbewahrungsstruktur zwischen einer oberen Fläche eines an dem Fahrzeugrumpf befestigten Bodens (74), einer Grundplatte (91) des Sitzes und dem Deckel (81) einen Raum für ein U-förmiges Schloß (100) begrenzt, wodurch bei aufbewahrtem Schloß (100) der Deckel von der oberen Fläche des Bodens in einen Bereich vorsteht, der vom Hauptabschnitt (101) und vom stangenartigen Abschnitt (102) des U-förmigen Schlosses (100) umgeben ist.

2. Motorrollerartiges Fahrzeug nach Anspruch 1, dadurch gekennzeichnet, daß unter der Diebstahlsicherungsvorrichtung (100) in dem Raum ein Ständersperrhebel (105) vorgesehen ist, um einen Hauptständer (18) in dessen Stützposition zu sperren.

## Revendications

1. Véhicule du type scooter possédant une selle (16) appuyée de manière à pouvoir pivoter verticalement sur un corps de véhicule, un réservoir (68) situé en dessous de cette selle (16), et un bouchon (81) prévu sur une surface supérieure de ce réservoir (68) et adapté pour être apparent lorsque ladite selle (16) pivote vers le haut, une structure contenant un dispositif de verrouillage, caractérisé en ce que ladite structure définit un espace destiné à un verrou en forme de U (100) entre une surface supérieure d'un plateau (74) fixé au corps de véhicule, une plaque de fond (91) de ladite selle et du bouchon (81), par ce moyen, lorsque ledit verrou (100) est en place, ledit bouchon dépasse de ladite surface supérieure du plateau dans une zone entourée par la partie corps (101) et la partie semblable à une tige (102) du verrou en forme de U (100).

2. Véhicule du type scooter selon la revendication 1, caractérisé en ce qu'un levier de verrouillage de béquille (105), destiné à verrouiller une béquille principale (18) dans sa position debout, est prévu en dessous de ce dispositif de verrouillage (100) dans ledit espace.
